# DEMANDE DE BREVET EUROPEEN

(11) **EP 2 617 611 A1**
(43) Date de publication de la demande: **24.07.2013**
(21) Numéro de dépôt: 13150823.6
(22) Date de dépôt: 10.01.2013
(51) Int. Cl.: B60S 1/16, H02K 5/10, F16H 57/027

(54) **Dispositif de protection d'une membrane respirante, groupe motoréducteur et système d'essuyage muni d'un tel dispositif ainsi que procédé de fabrication dudit dispositif**

(30) Priorité: 18.01.2012 FR 1250486
(71) Demandeur: Valeo Systèmes d'Essuyage, 78321 Le Mesnil Saint Denis (FR)
(72) Inventeur: Valliere, Jérôme, 86220 Les Ormes (FR)
(74) Mandataire: Callu Danseux, Violaine

(57) **Abrégé**

L'invention concerne un dispositif (1) de protection d'une membrane respirante (2) permettant la ventilation d'un organe, notamment motoréducteur (20) d'un système d'essuyage, ledit dispositif (1) comprenant un support (3), destiné à accueillir ladite membrane (2) à la surface dudit organe et un couvercle (4) permettant de protéger ladite membrane (2), ledit dispositif (1) étant configuré pour autoriser une circulation d'air entre l'intérieur et l'extérieur de l'organe à travers ladite membrane (2).

Selon l'invention, ledit couvercle (4) comprend au moins un orifice débouchant et ledit support (4) comprend au moins une excroissance traversant ledit orifice débouchant, une extrémité distale (7) de ladite excroissance étant configurée pour maintenir ledit couvercle (4) contre ledit support (3).

## Description

Le domaine de la présente invention est celui de l'automobile et, plus particulièrement, celui des équipements pour l'essuyage du pare-brise des automobiles.

Les automobiles sont couramment équipées de systèmes d'essuyage comprenant des essuie-glaces pour assurer un lavage du pare-brise et dégager la vision que le conducteur a de son environnement. Ces essuie-glaces sont classiquement entraînés par un bras effectuant un mouvement de va-et-vient angulaire et comportent des balais allongés, porteurs eux-mêmes de lames racleuses réalisées en une matière élastique. Ces lames frottent contre le pare-brise et évacuent l'eau en l'amenant en dehors du champ de vision du conducteur.

Le mouvement des balais est généré par un moteur électrique, lié à un réducteur. Ces pièces sont positionnées au voisinage des balais qu'ils entraînent, c'est à dire dans une zone soumise aux intempéries.

Pour éviter la condensation à l'intérieur du réducteur, il est connu de munir ce dernier d'une membrane respirante, c'est-à-dire, d'une membrane étanche au liquide et perméable à l'air. Une telle membrane doit être à l'abri des agressions extérieures et il a déjà été proposé de la disposer sous un couvercle qui la protège tout en laissant circuler l'air de part et d'autre de la membrane.

Cependant, dans les solutions connues, le couvercle est fixé par encliquetage ce qui ne donne pas entièrement satisfaction. Plus particulièrement, sous l'effet des vibrations induites par le véhicule lors du roulage, les risques de perte du couvercle sont élevés. En outre, le couvercle lui-même peut se mettre à vibrer et à émettre du bruit.

La présente invention a pour but de remédier à ces inconvénients en proposant un dispositif de protection d'une membrane respirante permettant la ventilation d'un organe, notamment motoréducteur d'un système d'essuyage, ledit dispositif comprenant un support, destiné à accueillir ladite membrane à la surface dudit organe et un couvercle permettant de protéger ladite membrane, ledit dispositif étant configuré pour autoriser une circulation d'air entre l'intérieur et l'extérieur de l'organe à travers ladite membrane.

Selon l'invention, ledit couvercle comprend au moins un orifice débouchant et ledit support comprend au moins une excroissance de fixation traversant ledit orifice débouchant, une extrémité distale de ladite excroissance de fixation étant configurée pour maintenir ledit couvercle contre ledit support.

On dispose ainsi d'une meilleure solidarisation du couvercle et de son support, ce qui limite les risques de perte dudit couvercle ainsi que les risques d'émission de bruit.

Ladite excroissance présente, par exemple, un pied, traversant ledit orifice, et une tête, en appui contre une surface extérieure du couvercle. Plus particulièrement, ladite tête présente une section supérieure à la section dudit pied et à la section dudit orifice débouchant. Ladite tête pourra être obtenue par thermo formage. On réalise de la sorte un rivetage à chaud du couvercle sur le support.

Selon différents aspects de l'invention, qui pourront être pris ensemble ou séparément :
- le dispositif comprend au moins un pilier présentant une base et une tige, ladite tige formant ladite excroissance,
- ladite tige est reliée à ladite base par une surface formant butée pour le couvercle,
- ladite surface formant butée est sensiblement rectangulaire,
- ladite tige est centrée sur ladite surface formant butée,
- ladite tige présente un diamètre sensiblement égal à la largeur de ladite surface formant butée.

L'invention concerne aussi un groupe motoréducteur muni d'une membrane respirante et d'un dispositif de protection de ladite membrane tel que décrit plus haut.

Ledit groupe comprend, par exemple, un boîtier accueillant un mécanisme de réduction, ledit support dudit dispositif de protection étant issu de matière dudit boîtier.

L'invention concerne encore un système d'essuyage muni d'un tel groupe motoréducteur.

L'invention concerne également un procédé de fabrication d'un dispositif de protection d'une membrane respirante permettant la ventilation d'un organe, notamment motoréducteur d'un système d'essuyage, ledit dispositif comprenant un support, destiné à accueillir ladite membrane à la surface dudit organe et un couvercle permettant de protéger ladite membrane, ledit dispositif étant configuré pour autoriser une circulation d'air entre l'intérieur et l'extérieur de l'organe.

Selon le procédé conforme à l'invention, on insère une excroissance dudit support à travers un orifice débouchant dudit couvercle et on déforme une extrémité distale de ladite excroissance de façon à ce que cette dernière maintienne ledit couvercle contre ledit support.

Ledit procédé permet la fabrication du dispositif de protection décrit plus haut. Autrement dit, selon un mode de mise en oeuvre dudit procédé, on réalise un thermo formage de l'extrémité distale de ladite excroissance.

L'invention sera mieux comprise, et d'autres buts, détails, caractéristiques et avantages de celle-ci apparaîtront plus clairement au cours de la description explicative détaillée qui va suivre, de modes de réalisation de l'invention donnés à titre d'exemples purement illustratifs et non limitatifs, en référence aux dessins schématiques annexés. Sur ces dessins :
- la figure 1 est une vue générale en perspective d'un système d'essuyage;
- la figure 2 est une vue éclatée, en perspective, d'un exemple de réalisation du dispositif de protection conforme à l'invention, avant thermo formage, ledit dispositif étant situé au niveau du groupe motoréducteur du système d'essuyage de la figure 1, ledit groupe étant illustré de façon partielle;
- la figure 3 est une vue assemblée, en perspective, du dispositif de la figure 2, avant thermo formage;
- la figure 4 est une vue assemblée, en perspective, du dispositif de la figure 2, après thermo formage.

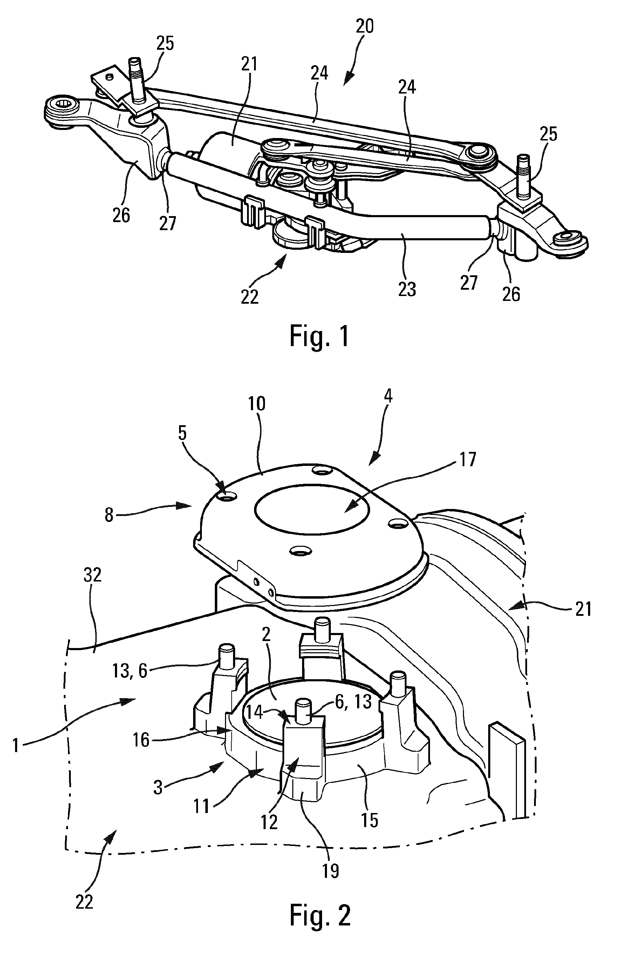

En se référant à la figure 1, on voit un exemple de système d'essuyage d'un véhicule auquel l'invention pourra s'appliquer. Il comprend un groupe motoréducteur d'entraînement 20. Ledit groupe 20 est ici porté par une traverse tubulaire 23. Il comprend un moteur 21 lié à un réducteur 22 qui actionne les bras de deux essuie-glaces, non représentés, grâce à des bielles 24 qui forcent le pivotement de ces bras autour de deux pivots 25. Ces pivots sont portés chacun par un support de pivot 26 qui est fixé sur le châssis du véhicule. Les deux supports de pivot sont reliés l'un à l'autre par la traverse tubulaire 23 qui est creuse et qui coopère à chacune de ses extrémités avec un pion 27, s'étendant à partir du support de pivot correspondant.

Comme illustré aux figures 2 à 4, l'invention concerne plus particulièrement un dispositif 1 de protection d'une membrane respirante 2 permettant la ventilation d'un organe, notamment le réducteur 22 du système d'essuyage.

Ladite membrane 2 permet à l'air de passer de l'intérieur de l'organe à l'extérieur de celui-ci, ce qui permet de limiter les risques de condensation dans le réducteur 22, voir dans le moteur 21. Il est en effet désirable d'éviter un tel phénomène pour le bon fonctionnement et la durée de vie du système d'essuyage. La membrane 2 est de plus imperméable au liquide pour empêcher toute intrusion d'eau à l'intérieur de l'organe. Une telle membrane pourra être constituée, par exemple, du matériau connu sous le nom de goretex® ou de tout autre matériau équivalent.

Ledit dispositif 1 de protection comprend un support 3, destiné à accueillir ladite membrane 2 à la surface dudit organe et un couvercle 4 permettant de protéger ladite membrane 2. Ledit couvercle 4 présente ainsi une face, non visible, située en vis-à-vis de la membrane 2 et une face opposée 10. Ledit support 3 et/ou ledit couvercle 4 sont, notamment, en matériau thermo plastique.

Ledit dispositif 1 est configuré pour autoriser une circulation d'air entre l'intérieur et l'extérieur de l'organe à travers ladite membrane 2 afin de pouvoir assurer les échanges gazeux désirés. Ledit support 3 et ledit couvercle 4 sont ainsi disposés l'un par rapport à l'autre pour permettre une telle circulation.

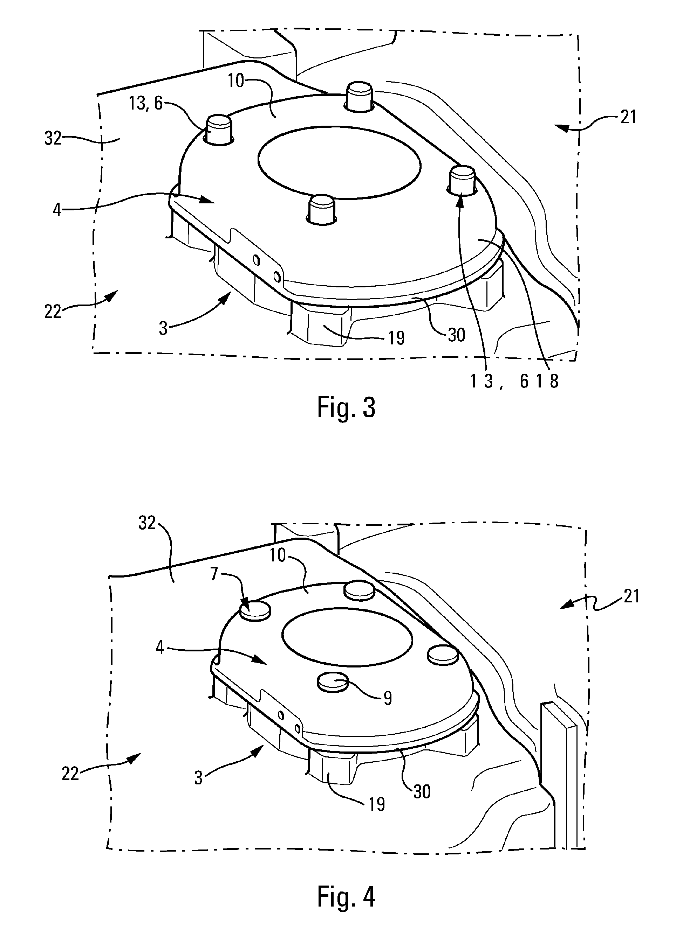

Selon l'invention, ledit couvercle 4 comprend au moins un orifice débouchant 5 et ledit support 3 comprend au moins une excroissance 6 traversant ledit orifice débouchant 5. Comme plus particulièrement visible à la figure 4, une extrémité distale 7 de ladite excroissance 6 est configurée pour maintenir ledit couvercle 4 contre ledit support 3. Par « extrémité distale », on entend la partie de l'excroissance 6 dépassant de l'orifice 5 du côté de la face opposée 10 du couvercle 4.

On dispose de la sorte d'une fixation du couvercle 4 sur le support 3 peu, voire non sensible aux vibrations. On assure également un positionnement précis du couvercle 4 sur le support 3, garantissant une circulation d'air suffisante à travers la membrane 2.

Ladite excroissance 6 présente, par exemple, un pied, non-visible figure 4, traversant ledit orifice débouchant 5, et une tête 9, en appui contre une surface extérieure du couvercle 4, c'est-à-dire, la face opposée 10 dudit couvercle 4. Ladite tête 9 est liée audit pied et présente une section supérieure à celle de ce dernier ainsi qu'à celle dudit orifice débouchant 5. Autrement dit, ladite excroissance 6 présente sensiblement une forme de champignon. Ladite tête 9 est obtenue, par exemple, par thermo formage.

Comme cela est mieux visible à la figure 2, ledit dispositif 1 pourra comprendre au moins un pilier 11 présentant une base 12 et une tige 13, formant ladite excroissance 6. Ladite tige 13 et/ou ledit orifice débouchant 5 correspondant sont, notamment, de section ronde.

Ladite tige 13 est ici reliée à ladite base 12 par une surface 14 formant butée pour le couvercle 4. Après montage, la face non visible du couvercle 4 est ainsi au contact de la surface 14 du pilier 11. On assure de la sorte la présence d'un jeu suffisant entre la membrane 2 et le couvercle 4 pour la circulation de l'air à travers ladite membrane 2.

Comme illustré, ladite surface 14 formant butée pourra être sensiblement rectangulaire, ladite tige 13 est centrée sur ladite surface 14 formant butée et ladite tige 13 présente un diamètre sensiblement égal à la largeur de ladite surface 14 formant butée. Cette dernière définit de la sorte deux épaulements pour le couvercle 4 de part et d'autre de la tige 13.

Le couvercle 4 présente ici des sommets 8 et il est prévu des orifices débouchant 5 tels que décrit plus haut à chacun des sommets dudit couvercle 4, ledit support 3 étant muni d'un nombre correspondant d'excroissances 6. Ledit couvercle 4 est, par exemple, sensiblement rectangulaire. Il est ici muni d'un dôme 17 concave, en son centre.

Le support 3 comprend, notamment, un puits 15 muni d'une surface 16 de support de ladite membrane 2. Le ou lesdits piliers 11 sont disposés dans l'axe dudit puits 15, tangentiellement à ce dernier. Ledit puits 15 est ici de section circulaire de diamètre inscrit dans le couvercle 4. Il présente un orifice de passage, circulaire, destiné à être coiffé par ladite membrane 2.

Pour venir en correspondance des orifices débouchant 5, ledit dispositif comprend, dans l'exemple illustré, quatre piliers 11, tous de forme identique, situé à 90° les uns des autres.

Ledit couvercle 4 pourra en outre présenter une jupe 18 descendant, une fois ledit couvercle 4 en place, au moins au niveau de ladite surface 16 de support de la membrane 2, dans l'axe dudit puits 15. Ladite jupe 18 pourra ainsi se trouver au niveau d'un pied 19 du ou des piliers 11, relié à l'organe équipé de la membrane 2. Ladite jupe 18 se termine, par exemple, par une nervure 30. Ledit couvercle 4 présente ici une telle jupe 18 au niveau de deux de ses côtés opposés.

Ledit dispositif de protection 1 est situé, par exemple, au niveau du groupe moto réducteur 20, en particulier au niveau d'un boîtier 32 du réducteur 22 dudit groupe. Ledit boîtier accueille un mécanisme de réduction, lié à un arbre d'entrainement du moteur 21, non-visibles. Ledit support 3 dudit dispositif de protection 1 pourra être issu de matière dudit boîtier. Plus particulièrement, ledit boîtier comprend un corps et couvercle fermant ledit corps, ledit dispositif de protection étant issu de matière dudit couvercle.

L'invention concerne aussi un procédé de fabrication d'un dispositif de protection d'une membrane respirante tel que celui décrit plus haut.

Selon ledit procédé, comme illustré à la figure 3, on insère tout d'abord les excroissances 6 du support 3 à travers les orifices débouchant 5, correspondants, dudit couvercle 4, notamment jusqu'à ce que ledit couvercle 4 viennent en butée sur les épaulements des surfaces de butée 14.

Comme illustré à la figure 4, on déforme par la suite les extrémités distales 7 desdites excroissances 6 de façon à ce que ces dernières maintiennent ledit couvercle 4 contre ledit support 3. Comme déjà dit, on pourra faire subir pour cela un thermo formage auxdites extrémités distales qui prennent alors la forme des têtes 9. Comme déjà dit, après thermo formage, les têtes 9 présentent une section de diamètre plus grand que celui des orifices débouchant 5.

## Revendications

1. Dispositif (1) de protection d'une membrane respirante (2) permettant la ventilation d'un organe, notamment motoréducteur (20) d'un système d'essuyage, ledit dispositif (1) comprenant un support (3), destiné à accueillir ladite membrane (2) à la surface dudit organe et un couvercle (4) permettant de protéger ladite membrane (2), ledit dispositif (1) étant configuré pour autoriser une circulation d'air entre l'intérieur et l'extérieur de l'organe à travers ladite membrane (2), **caractérisé en ce que** ledit couvercle (4) comprend au moins un orifice débouchant (5) et ledit support (3) comprend au moins une excroissance (6) traversant ledit orifice débouchant (5), une extrémité distale (7) de ladite excroissance (6) étant configurée pour maintenir ledit couvercle (4) contre ledit support (3).

2. Dispositif selon la revendication 1 dans lequel ladite excroissance (6) présente un pied, traversant ledit orifice (5), et une tête (9), en appui contre une surface extérieure (10) du couvercle (4).

3. Dispositif selon la revendication 2 dans lequel ladite tête (9) présente une section supérieure à la section dudit pied et à la section dudit orifice débouchant (5).

4. Dispositif selon la revendication 2 ou 3 dans lequel ladite tête (9) est obtenue par thermo formage.

5. Dispositif selon l'une quelconque des revendications 1 à 4 comprenant au moins un pilier (11) présentant une base (12) et une tige (13), ladite tige (13) formant ladite excroissance (6).

6. Dispositif selon revendication 5 dans lequel ladite tige (13) est reliée à ladite base (12) par une surface (14) formant butée pour le couvercle (4).

7. Dispositif selon l'une des revendications 5 ou 6 dans lequel :
- ladite surface (14) formant butée est sensiblement rectangulaire,
- ladite tige (13) est centrée sur ladite surface formant butée,
- ladite tige (13) présente un diamètre sensiblement égal à la largeur de ladite surface (14) formant butée.

8. Groupe motoréducteur muni d'une membrane respirante (2) et d'un dispositif (1) de protection de ladite membrane (2) selon l'une quelconque des revendications précédentes.

9. Groupe selon la revendication 8 comprenant un boîtier (32) accueillant un mécanisme de réduction, ledit support (3) dudit dispositif (1) de protection étant issu de matière dudit boîtier (32).

10. Système d'essuyage muni d'un groupe selon l'une quelconque des revendications 8 ou 9.

11. Procédé de fabrication d'un dispositif (1) de protection d'une membrane respirante (2) permettant la ventilation d'un organe, notamment motoréducteur d'un système d'essuyage, ledit dispositif (1) comprenant un support (3), destiné à accueillir ladite membrane (2) à la surface dudit organe et un couvercle (4) permettant de protéger ladite membrane (2), ledit dispositif (1) étant configuré pour autoriser une circulation d'air entre l'intérieur et l'extérieur de l'organe, procédé dans lequel on insère une excroissance (6) dudit support à travers un orifice débouchant (5) dudit couvercle (4) et on déforme une extrémité distale (7) de ladite excroissance (6) de façon à ce que cette dernière maintienne ledit couvercle (4) contre ledit support (3).
